Europäisches Patentamt

European Patent Office

Office européen des brevets

(11) Veröffentlichungsnummer: **0 293 392**
**B1**

(12) **EUROPÄISCHE PATENTSCHRIFT**

(45) Veröffentlichungstag der Patentschrift: 29.08.90

(51) Int. Cl.⁵: **B 60 T 8/32**

(21) Anmeldenummer: 87902082.4

(22) Anmeldetag: 25.03.87

(86) Internationale Anmeldenummer:
PCT/EP87/00168

(87) Internationale Veröffentlichungsnummer:
WO 87/05869 08.10.87 Gazette 87/22

(54) ANTIBLOCKIERREGELSYSTEM.

(30) Priorität: 26.03.86 DE 3610185

(43) Veröffentlichungstag der Anmeldung:
07.12.88 Patentblatt 88/49

(45) Bekanntmachung des Hinweises auf die
Patenterteilung:
29.08.90 Patentblatt 90/35

(84) Benannte Vertragsstaaten:
AT DE FR GB IT SE

(56) Entgegenhaltungen:
DE-A-2 460 904
GB-A-2 016 621
GB-A-2 135 745

(73) Patentinhaber: ROBERT BOSCH GMBH
Postfach 50
D-7000 Stuttgart 1 (DE)

(72) Erfinder: BRASCHEL, Volker
Goethestr. 1
D-7100 Heilbronn (DE)
Erfinder: SEITZ, Dieter
In der Aue 18
D-7141 Schwieberdingen (DE)
Erfinder: SCHÄFER, Jöchen
Belchenweg 18
D-7140 Ludwigsburg 11 (DE)

(74) Vertreter: Kammer, Arno
Postfach 10 56 08 Grenzhöfer Weg 36
D-6900 Heidelberg 1 (DE)

EP 0 293 392 B1

## Beschreibung

Die Erfindung betrifft ein Antiblockierregelsystem mit den Merkmalen des Oberbegriffs des Anspruchs 1.

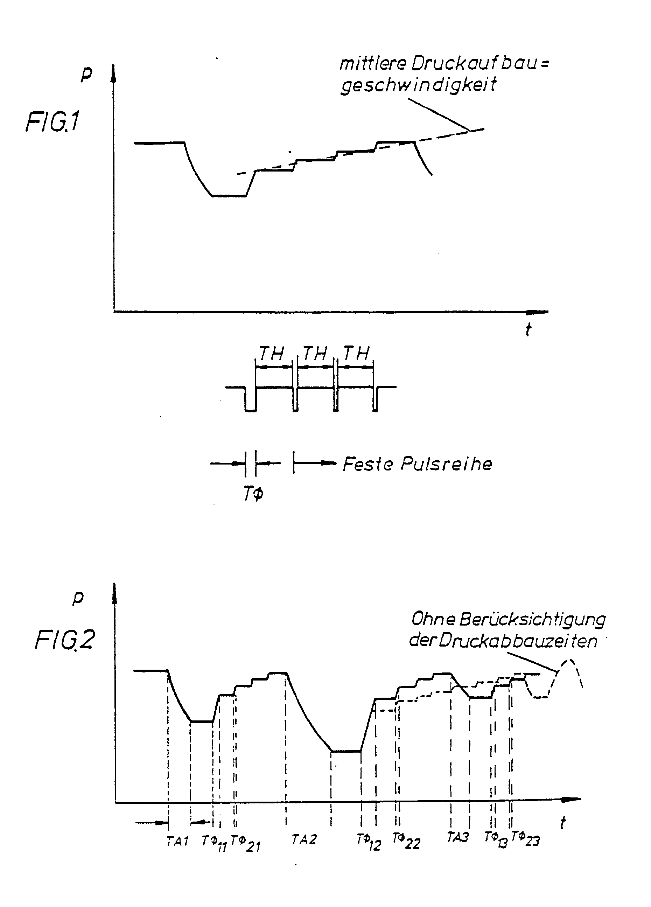

Es ist bekannt, bei Antiblockierregelsystemen, bei denen während der Regelung zur Erzielung einer flachen mittleren Drucksteigerungsgeschwindigkeit der Druckaufbau gepulst erfolgt, aus Gründen einer guten Abbremsung den ersten Aufbaupuls nach einer Instabilität größer zu gestalten als die nachfolgenden Impulse (DE—A—2 460 904). Dies zeigt Fig. 1.

Hierbei ist die Zeit $T\emptyset$ des Druckaufbaus abhängig von der Anzahl der Druckaufbaupulse (oder der Druckaufbauzeit), die im vorhergegangenen Regelzyklus erforderlich waren, um das Rad instabil werden zu lassen. Die Haltezeit $T_H$ hat entweder eine fest vorgegebene Länge oder die als optimal erachtete Haltezeit wird durch einen Lernprozeß ermittelt.

Der Erfindung liegt die Aufgabe zugrunde die genannte Regelung weiter zu optimieren.

Dies wird durch die Merkmale von Patentanspruch 1 erreicht.

Hierzu wird die Druckaufbauzeit $T_\emptyset$ vor der festen Impulsreihe vorzugsweise in zwei Pulsaufbauzeiten $T\emptyset1$ und $T\emptyset2$ aufgeteilt. Dabei sollte $T\emptyset1$ deutlich größer sein, als $T\emptyset2$.

Da $T\emptyset1$ und $T\emptyset2$ nur dann eine Drucksteigerung der gewünschten Höhe bewirken können, wenn bekannt ist, ob sich das Druckniveau zu Beginn des Pulses $T\emptyset1$ deutlich von dem Wert im vorhergegangenen Regelzyklus unterscheidet, wird zusätzlich auch die Druckabbauzeit bei der Bestimmung von $T\emptyset1$ und $T\emptyset2$ berücksichtigt. Hierbei soll gelten, wenn $T_{An}$ die Druckabbauzeit im n. Zyklus und $T\emptyset1n$ und $T\emptyset2n$ die beiden Druckaufbauzeiten im n. Zyklus sind: bei $TA2>TA1$ soll $T\emptyset12>T\emptyset11$ und $T\emptyset22>T\emptyset21$ sein und bei $TA3 \ll TA2$ soll $T\emptyset13 \ll T\emptyset12$ und $T\emptyset23 \ll T\emptyset22$ sein.

Die Wirkung einer zusätzlichen Maßnahme ergibt sich aus Fig. 2 im zweiten Regelzyklus.

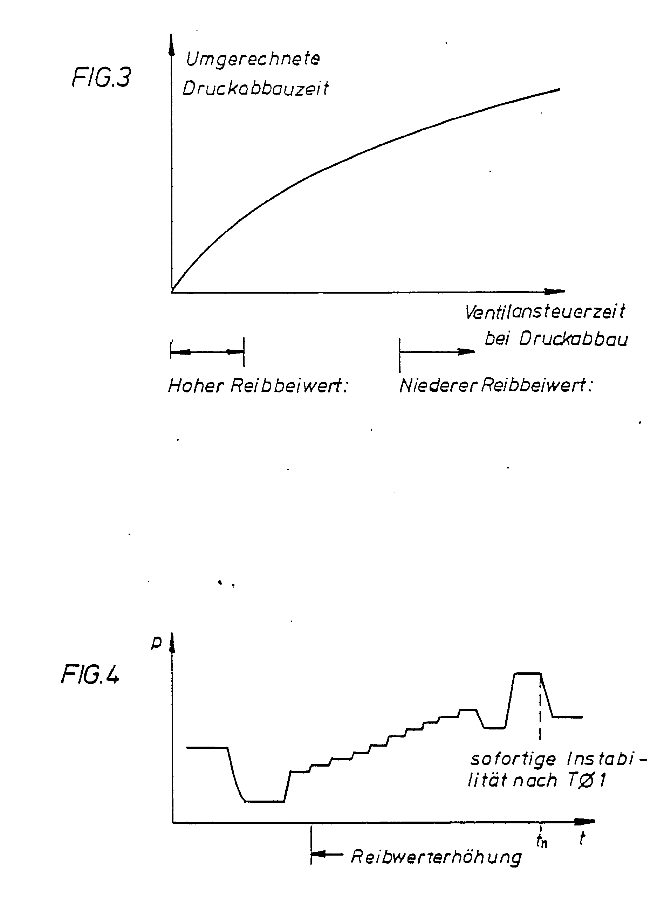

Da nur bei höheren Bremsdrücken ein linearer Zusammenhang zwischen Bremsdruckabsenkung und Ventilansteuerzeit besteht, muß die gemessene Druckabbauzeit noch umgerechnet werden, ehe sie in die Festlegung von $T\emptyset1$ und $T\emptyset2$ eingeht. Der Zusammenhang ist in Fig. 3 wiedergegeben.

Mit diesem Verfahren können die Pulse $T\emptyset1$ und $T\emptyset2$ auf homogenen Fahrbahnen so gut bestimmt werden, daß nach $T\emptyset2$ der Blockierdruck annähernd wieder erreicht ist und somit der mittlere Druckgradient für die weitere Drucksteigerung sehr flach sein kann. Dieses Verfahren ist auch bei kurzzeitigen Reibwertschwankungen in der Lage, eine richtige Bestimmung von $T\emptyset1$ und $T\emptyset2$ zu ermöglichen. Wird z.B. bei einem kurzzeitigen Reibbeiwertabfall (z.B. Eisplatte) das Druckauslaßventil vergleichsweise lange angesteuert, so werden beim anschließenden Druckaufbau (mittlerweile wieder hoher Reibbeiwert) die Zeiten für $T\emptyset1$ und $T\emptyset2$ deutlich erhöht.

Bei einer Erhöhung des Reibbeiwertes läuft die Pulsreihe sehr lange, ehe wieder eine Instabilität auftritt (Fig. 4). Damit werden für $T\emptyset1$ und $T\emptyset2$ große Werte festgelegt. Dies führt dazu, daß das Rad sofort wieder überbremst wird. Dies ist ebenfalls in Fig. 4 bei $t_n$ gezeigt.

Dies wird verhindert, wenn man für $T\emptyset1$ und $T\emptyset2$ keine größeren Zeiten zuläßt, als es der Summe der Druckabbauzeiten während der letzten Instabilitätsphase entspricht.

Der Druckaufbau nach $T\emptyset2$ kann anstelle von Pulsreihen, die mit konstantem $\Delta t$ für die Haltephasen arbeiten, auch mit Pulsreihen erfolgen, bei denen die Haltephasen von der Abnahme der Fahrzeuggeschwindigkeit abhängt. Hier erfolgt immer, wenn ein vorgegebenes $\Delta v$ erreicht wird, für eine bestimmte Zeit ein Druckaufbau; dann ist die Länge der Druckhaltephase abhängig von der Fahrzeugverzögerung. Bei kleinen Fahrzeugverzögerung sind die Haltephasen lang (lange Stabilitätsphasen auf niederem $\mu$) und bei hohen Fahrzeugverzögerungen kurz.

Reibwerterhöhungen werden hierbei schneller erkannt und die mittlere Druckaufbaugeschwindigkeit schneller gesteigert. Gleiches erzielt man auch über den Umweg über die gemessene oder errechnete Fahrzeugverzögerung: Bei kleinen Verzögerungen werden große $\Delta t$ für die Haltephasen festgelegt und bei hohen Verzögerungen kleine $\Delta t$.

Die erfindungsgemäße Aufteilung von $T\emptyset$ in $T\emptyset1$ und $T\emptyset2$ hat den Vorteil, daß die bei jedem Druckaufbaupuls auftretenden Radumfangsverzögerungen nicht zu große Werte annehmen: Bei zu großem Druckaufbau über die Zeit $T\emptyset$ können kurzzeitig so hohe Radumfangsverzögerungen errechnet werden, daß fälschlicherweise eine Instabilität erkannt wird. Durch die Aufteilung von $T\emptyset$ in $T\emptyset1$ und $T\emptyset2$ kann somit über diese beiden Pulse näher an den Blockierdruck herangefahren werden, ohne daß unzulässig hohe Verzögerungswerte auftreten. Dies gilt besonders dann, wenn auch die Pulse $T\emptyset1$ und $T\emptyset2$ nochmals durch kurze Druckhaltephasen unterbrochen werden.

Durch die Berücksichtigung der Druckabbauzeiten werden außerdem bei Reibwertsschwankungen die Pulszeiten $T\emptyset1$ und $T\emptyset2$ richtig festgelegt.

Durch die Festlegung, daß $T\emptyset1$ und $T\emptyset2$ nicht größer werden dürfen, als die vorhergegangene Abbauzeit wird zusätzlich eine zu schnelle Überbremsung beim Start der Pulsreihe nach einer Reibwertvergrößerung verhindert.

Sind schließlich die Druckhaltephasen abhängig von der Fahrzeuggeschwindigkeitsabnahme $\Delta v$ oder von der Fahrzeugverzögerung, so ergeben sich auf niederem $\mu$ längere Stabilitätsphasen und Reibbeiwertanstiege werden schneller bekannt.

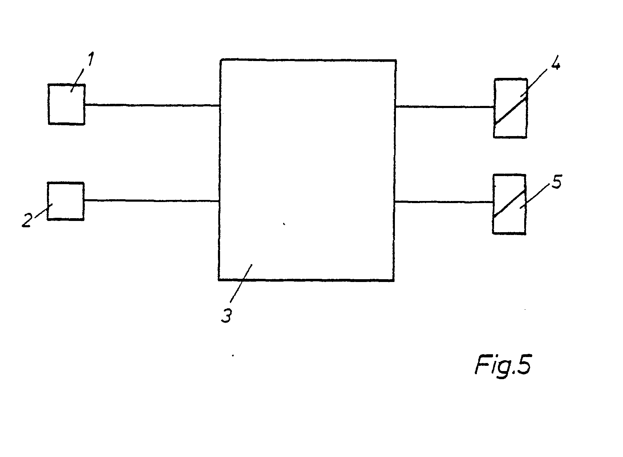

Die obigen erläuterten Maßnahmen werden anhand eines Ausführungsbeispiels der Zeichnung näher erläutert. Die Fig. 5 zeigt ein Antiblockierregelsystem in Prinzipdarstellung. Zwei verschiedenen Rädern zugeordnete Meßwertgeber für die Radgeschwindigkeit sind mit 1 und 2 bezeichnet und eine Auswerteschaltung mit 3. Aus den zugeführten Radgeschwindigkeitssignalen leitet die Auswerteschaltung 3 Bremsdrucksteuersignale ab, die Magnetventilen 4 und 5, (insbesondere jeweils aus Einlaß- und Auslaßventil bestehende Ventilkombinationen) zugeführt werden und die dadurch den Bremsdruck an den zugehörigen Rädern variieren.

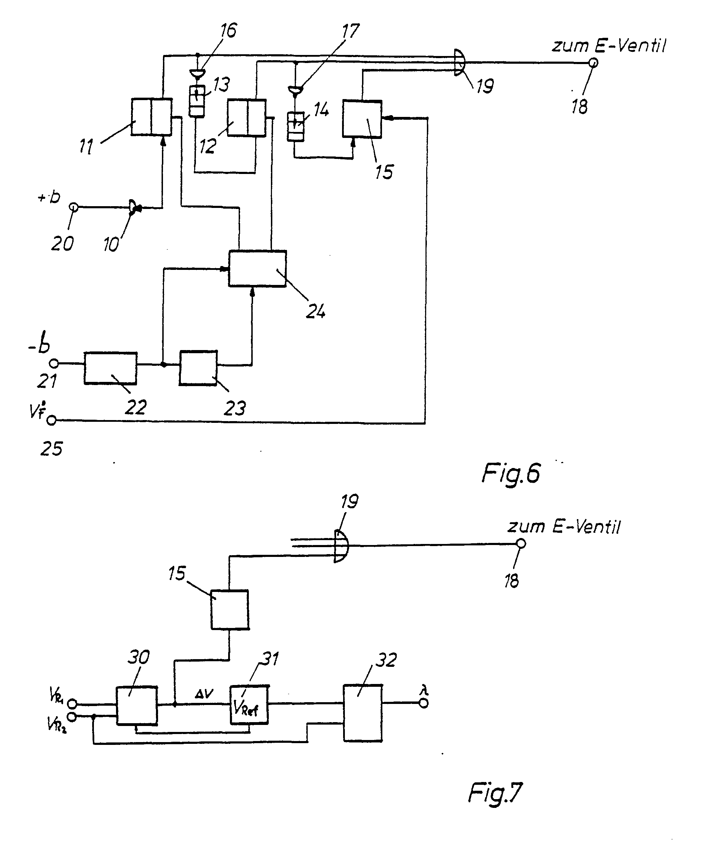

Zur Realisierung des Druckaufbaus gemäß der Erfindung kann die Auswerteschaltung der Fig. 5 die in Fig. 6 dargestellte Schaltung enthalten. Zur Erzeugung der Druckaufbauimpulse für ein Rad sind Inverter 10, 16 und 17, zwei monostabile Kippschaltungen 11 und 12, zwei Zeitglieder 13 und 14, ein Impulsgenerator 15 und ein Oder-Gatter 19 vorgesehen.

Ein an einer Klemme 20 zugeführtes Signal für die Druckkonstanthaltung (z.B. ein +b-Signal) setzt mit seiner Rückflanke (wegen des Inverters 10) das monostabile Glied 11, dessen Zeitkonstante die Impulszeit TØ1 des ersten Druckaufbauimpulses bestimmt. Dieser Impuls gelangt über das Oder-Gatter 19 zur Klemme 18, an der das Einlaßventil angeschlossen ist und bewirkt dort den Abfall des Einlaßventils, sodaß Druckaufbau während der Zeit TØ1 zustande kommt.

Durch die Abfallflanke dieses ersten Druckaufbauimpulses (TØ1) wird über den Inverter 16 das Zeitglied 13 gesetzt, das dann nach Ablauf seiner Verzögerungszeit das monostabile Glied 12 setzt. Das Zeitglied 13 bestimmt somit die Druckhaltephase bis zum Beginn des zweiten Druckaufbauimpulses mit der Dauer TØ2. Diese Dauer wird durch die Zeitkonstante des monostabilen Glieds 12 bestimmt; sie ist wesentlich kürzer als die Zeitkonstante des monostabilen Glieds 11. Die Rückflanke des zweiten Impulses setzt über den Inverter 17 das Zeitglied 14, das die anschließende Druckhaltezeit bestimmt. Am Ende der Haltezeit wird der Impulsgenerator 15 eingeschaltet, der den anschließenden Druckaufbau in Stufen bewirkt.

Die Zeiten TØ1 und TØ2 können variiert werden. Gemäß einem Ausführungsbeispiel werden lediglich durch Bestimmung der Dauer des an einer Klemme 21 anstehenden Druckabbausignals (z.B. des −b-Signals) im Block 22 und durch Umrechnung der gemessenen Zeitdauer entsprechend der Kurve der Fig. 3 in einen Block 23 über den Block 24 die Zeitkonstanten der monostabilen Glieder 11 und 12 geändert. Man kann jedoch dem Block 24 noch vorgeben, daß er die Summe der beiden Aufbauzeiten TØ1 und TØ2 nicht größer als die vorhergehende Druckabbauzeit $T_A$ werden läßt. Hierzu wird dem Block 24 noch die im Block 22 bestimmte Druckabbauzeit $T_A$ zugeführt.

Wie eingangs erwähnt, soll das Puls-Pause-Verhältnis der Impulse des Impulsgenerators von der Fahrzeugverzögerung abhängig sein. Hierzu wird dem Impulsgenerator 15 die an einer Klemme 25 zugeführte Fahrzeugverzögerung $V_F$ zugeführt.

Fig. 7 zeigt weitere Möglichkeiten für die Beeinflussung des Impulspauseverhältnisses des Impulsgenerators 15. Hier wird in einem Block 30 eine Maximalwertbildung aus den Radgeschwindigkeiten $V_{R_1}$ und $V_{R_2}$ durchgeführt und es wird mit dem maximalen $V_R$ und vorgegebenen Rampen für die Geschwindigkeitsabnahme fortlaufend eine Referenzgeschwindigkeit $V_{Ref}$ gebildet. Wird eine vorgegebene Differenz $\Delta v$ gegenüber einer vorher ermittelten Referenzgeschwindigkeit festgestellt, so wird diese einem Speicher 31, der vorher ermittelten $V_{Ref}$-Wert gespeichert hat, zur Anpassung zugeführt. Die Referenzgeschwindigkeit wird in einem Block 32 zur Bildung von Schlupfsignalen λ benötigt.

Die $\Delta v$ werden dem Impulsgenerator 15 zugeführt. Bei jeder auftretenden Geschwindigkeitsabnahme um $\Delta v$ wird im Impulsgenerator ein Druckaufbauimpuls ausgelöst. Damit sind die Längen der Druckhaltephasen von der Fahrzeugverzögerung abhängig. Das Auslösen der Impulse durch die $\Delta v$ darf natürlich nur wirksam sein, wenn nach Ende der bemessenen Impulse (TØ1 und TØ2) der Impulsgenerator 15 eingeschaltet wird.

## Patentansprüche

1. Antiblockierregelsystem mit Meßwertgebern zum Bestimmen des Radbewegungsverhaltens, einer Auswertschaltung, denen die Signale der Meßwertgeber zur Erzeugung von Bremsdrucksteuersignalen zugeführt werden und einer Bremsdrucksteuereinheit, der die Bremsdrucksteuersignale zur Variation des Bremsdrucks zugeführt werden, wobei nach einem Bremsdruckabbau zuerst ein durch den Bremsdruckaufbau in dem oder den vorhergehenden Regelzyklen zeitlich bestimmter Bremsdruckaufbau erfolgt und danach impulsförmige Folgesignale zum weiteren Druckaufbau bis zum Erreichen einer weiteren Instabilität des betreffenden Rads oder der betreffenden Räder folgen, dadurch gekennzeichnet, daß der zeitlich bestimmte Bremsdruckaufbau in wenigstens zwei in ihrer Dauer bestimmte Bremsdruckaufbauimpulse mit den Druckaufbauzeiten (TØ1 und TØ2 usw.) unterteilt ist, wobei jeweils die Zeit des vorhergehenden Impulses größer als die Zeit des nachfolgenden Impulses ist.

2. Antiblockierregelsystem nach Anspruch 1, dadurch gekennzeichnet, daß die Druckaufbauzeiten (TØ1 und TØ2 usw.) von der vorhergehenden Druckabbauzeit ($T_A$) abhängig sind.

3. Antiblockierregelsystem nach Anspruch 2, dadurch gekennzeichnet, daß die Druckabbauzeit ($T_A$) vor Berücksichtigung nach Maßgabe einer eine Erniedrigung gegen höhere Abbauzeiten bewirkende Funktion umgerechnet wird.

4. Antiblockierregelsystem nach einem der Ansprüche 1—3, dadurch gekennzeichnet, daß der durch die Folgesignale bewirkte Druckaufbau mit sehr kleinen Gradienten erfolgt.

5. Antiblockierregelsystem nach einem der Ansprüche 1—4, dadurch gekennzeichnet, daß bei der Bemessung der Zeiten (TØ1 und TØ2 usw.) die Summe dieser Zeiten nicht größer als die vorhergehende Druckabbauzeit ($T_A$) ist.

6. Antiblockierregelsystem nach einem der Ansprüche 1—5, dadurch gekennzeichnet, daß die Haltephasen beim Druckaufbau durch die Folgesignale von der Abnahme der Fahrzeuggeschwindigkeit abhängig sind.

7. Antiblockierregelsystem nach Anspruch 6, dadurch gekennzeichnet, daß jeweils nach einer vorgegebenen Geschwindigkeitsabnahme (Δv) eine Druckaufbau erfolgt.

8. Antiblockierregelsystem nach einem der Ansprüche 1—7, dadurch gekennzeichnet, daß die Haltephasen beim Druckaufbau durch die Folgesignale von der Fahrzeugverzögerung abhängig sind.

**Revendications**

1. Système de régulation anti-blocage comportant des capteurs pour déterminer le comportement des roues en mouvement, un circuit d'exploitation recevant les signaux des capteurs pour créer des signaux de commande de pression de frein et une unité de commande de pression de frein qui reçoit les signaux de commande de pression de frein pour modifier la pression de frein, et après la chute de pression de frein, on effectue d'abord une montée en pression déterminée dans le temps par la montée en pression au cours du ou des cycles de régulation précédents, montée en pression suivie par des signaux de suite d'impulsions pour continuer la montée en pression jusqu'à ce que la ou les roues correspondantes atteignent de nouveau un état instable, système caractérisé en ce que la montée en pression déterminée dans le temps se subdivise en au moins deux impulsions de montée en pression de durées déterminées avec des temps de montée en pression (TØ1 et TØ2 etc.) et le temps de chaque impulsion précédente est supérieur à celui de l'impulsion suivante.

2. Système de régulation anti-blocage selon la revendication 1, caractérisé en ce que les temps de montée en pression (TØ1 et TØ2 etc.) dépendent du temps de chute de pression précédent ($T_A$).

3. Système de régulation anti-blocage selon la revendication 2, caractérisé en ce que le temps de chute de pression ($T_A$) est transformé par le calcul avant de tenir compte d'une fonction qui crée un abaissement par rapport à des durées de chute de pression plus élevées.

4. Système de régulation anti-blocage selon l'une des revendications 1 à 3, caractérisé en ce que la montée en pression créée par la suite de signaux se fait avec des gradients très faibles.

5. Système de régulation anti-blocage selon l'une des revendications 1 à 4, caractérisé en ce qu'en déterminant les temps (TØ1 et TØ2 etc.), la somme de ces temps en doit pas être supérieure au temps de chute de pression précédent ($T_A$).

6. Système de régulation anti-blocage selon l'une des revendications 1 à 5, caractérisé en ce que les phases de retenue au moment de la montée en pression sous l'action de la suite de signaux dépendent de la diminution de la vitesse du véhicule.

7. Système de régulation anti-blocage selon la revendication 6, caractérisé par une montée en pression après chaque diminution de vitesse (Δv) prédéterminée.

8. Système de régulation anti-blocage selon l'une des revendications 1 à 7, caractérisé en ce que lors de la montée en pression par la suite de signaux, les phases de retenue dépendent de la décélération du véhicule.

**Claims**

1. Anti-locking regulating system having measured-value transmitters for determining the wheel movement behaviour, an evaluation circuit, to which the signals of the measured-value transmitters are fed in order to produce brake pressure control signals, and a brake pressure control unit to which the brake pressure control signals are fed in order to vary the brake pressure, after a brake pressure reduction a brake pressure build-up determined in terms of time by the brake pressure build-up in the preceding control cycle or cycles first of all occurring and successor signals in the form of pulses for building up the pressure further until a further instability of the relevant wheel or of the relevant wheels then following, characterized in that the brake pressure build-up determined in terms of time is sub-divided into at least two brake pressure build-up pulses determined in their duration, having the pressure build-up times (TØ1 and TØ2 etc.), the time of the preceding pulse in each case being greater than the time of the subsequent pulse.

2. Anti-locking regulating system according to Claim 1, characterized in that the pressure build-up times (TØ1 and TØ2 etc.) are dependent on the preceding pressure reduction time ($T_A$).

3. Anti-locking regulating system according to Claim 2, characterized in that the pressure reduction time ($T_A$) is converted before consideration according to a function effecting a reduction towards higher reduction times.

4. Anti-locking regulating system according to one of Claims 1—3, characterized in that the pressure build-up brought about by the successor signals is effected with very small gradients.

5. Anti-locking regulating system according to one of Claims 1—4, characterized in that, in the proportioning of the times (TØ1 and TØ2 etc.), the sum of these times is not greater than the preceding pressure reduction time ($T_A$).

6. Anti-locking regulating system according to one of Claims 1—5, characterized in that the holding phases during the pressure build-up by the successor signals are dependent on the decrease in the vehicle speed.

7. Anti-locking regulating system according to Claim 6, characterized in that a pressure build-up is in each case effected after a predetermined decrease (Δv) in speed.

8. Anti-locking regulating system according to one of Claims 1—7, characterized in that the holding phases during the pressure build-up by the successor signals are dependent on the vehicle deceleration.

FIG.1

p

mittlere Druckaufbau=
geschwindigkeit

t

TH   TH   TH

Feste Pulsreihe

Tφ

FIG.2

p

Ohne Berücksichtigung
der Druckabbauzeiten

t

TA1   Tφ$_{11}$ Tφ$_{21}$   TA2   Tφ$_{12}$  Tφ$_{22}$   TA3   Tφ$_{13}$ Tφ$_{23}$

FIG.3

Umgerechnete
Druckabbauzeit

Ventilansteuerzeit
bei Druckabbau

Hoher Reibbeiwert:          Niederer Reibbeiwert:

FIG.4

$p$

sofortige Instabilität nach TØ1

$t_n$          $t$

Reibwerterhöhung

2

Fig.5

zum E-Ventil

Fig.6

zum E-Ventil

Fig.7